# EUROPEAN PATENT APPLICATION

(11) **EP 4 790 308 A1**
(43) Date of publication of application: **12.08.2026**
(21) Application number: 25156059.5
(22) Date of filing: 05.02.2025
(51) Int. Cl.: F17C 13/00, B64G 1/40

(54) **STORAGE SYSTEM FOR A CRYOGENIC LIQUID IN AN IN-SPACE APPLICATION**

(71) Applicant: ArianeGroup GmbH, 82024 Taufkirchen (DE)
(72) Inventor: Dr. Dietze, Diana, 28844 Weyhe (DE); Graf, Simon, 82008 Unterhaching (DE); Wolf, Marco, 28844 Weyhe (DE)
(74) Representative: Schicker, Silvia

(57) **Abstract**

A storage system for a cryogenic liquid in an in-space application is provided. The system comprises a storage tank for storing the cryogenic liquid, the storage tank having an outlet for discharging boil-off gas into a boil-off gas line and an inlet for introducing re-liquefied cryogenic liquid, and a cooling section for carrying a cooling medium. The cooling section comprises a space background cooling radiator for radiating heat from the cooling medium into space, the space background cooling radiator being configured to cool down the cooling medium, and a cooling element configured to carry the cooling medium after having passed the space background cooling radiator. The cooling element is in thermal contact with the boil-off gas discharged from the storage tank. The cooling element is configured to cool down the boil-off gas. The cooling section is configured to at least partially re-liquefy the cooled down boil-off gas to become the re-liquefied cryogenic liquid introduced via the inlet into the storage tank. Further, a corresponding method is provided.

## Description

### Technical Field

The present disclosure relates to the field of storage and handling of cryogenic liquids in in-space applications, i.e., in zero-gravity or microgravity applications.

### Background

Currently the main focus of development when discussing storage of cryogenic liquids in space is the prevention of loss of liquid by reducing an amount of boil-off gas (i.e., by reducing evaporation), see documents [1-3]. The re-use of evaporated propellant is mainly considered to reduce the ingested heat or to reduce stored energy within the tank system, see document [4].

Already evaporated gas (so-called boil-off gas) equals a loss of usable propellant and therefore the full system efficiency is based on an evaporation rate within the considered system. A deployed system in space does have a lifetime limitation related to the amount of cryogenic propellant and capability to reduce the evaporation rate.

It is known to use re-liquefaction in ground operating systems with multiple compressors and/or liquids which are at a lower temperature than the saturation temperature of the considered liquid [4, 5, 11].

However, on ground, the acceleration conditions are clear, the environment is at temperatures of approximately 300 K and convectional heat transfer to the surrounding environment is feasible to be utilized [5, 6, 7, 8, 9, 10, 12]. Further, continuous supply of liquid nitrogen can be utilized to liquefy any vapor with saturation temperatures above 77 K (CH4, 02). In space, the heat transfer to the environment is based on radiation with a background temperature of 2.7 K. Any convectional heat transfer needs to be provided by the operational system and a supply of cooling media such as liquid nitrogen is considered not efficient and not feasible for liquefaction of hydrogen. Moreover, the currently available or planned hydrogen liquefying units are of a too large size in order to be feasible for implementation in currently available space transportation systems [13, 14, 15, 16].

Known prior art documents cited in the present disclosure:
[1] C. B. Muratov, V. V. Osipov, V. N. Smelyanskiy; Issues of Long-Term Cryogenic Propellant Storage in Microgravity; NASA/TM-2011-21598
[2] R. J. Christie, T. M. Tomsik, J. P. Elcher, M. C. Guzik; Broad Area Cooler Concepts for Cryogenic Propellant Tanks 1; Thermal & Fluids Analysis Workshop (TFAWS), NASA Langley Reserch Center (2011);
[3] M. Moser, W. Hoidn, P. Delouard, A. Tvaruzka, M. Loche, U. Lafont, Versatile Thermal Insulation for Cryogenic Upper Stages, 46th International Conference on Environmental Systems, ICES-2016-119, 10.07.2016
[3] L.J. Hastings; R.H. Flachbart, J.J. Martin, A. Hedayat, M. Fazah, T. Lak, H. Nguyen, J.W. Bailey; NASA Spray Bar Zero-Gravity Vent System for On-Orbit Liquid Hydrogen Storage; NASA/TM-2003-212926
[4] US3990265 (A): Joule-Thomson liquefier utilizing the Leidenfrost principle: This publication concerns the basic use of a physical principle for cooling
[5] GB1150061 (A): Gas Liquefier: This system is considered to be used for liquefaction of gases such as air, oxygen, nitrogen, argon, krypton or xenon.
[6] US2009094992 (A1): Gas Liquefier: This system is clearly restricted to ground based use, since the gravitational acceleration is used to separate liquid and gas. Further this process is not continuous, since the volume is defined and limited.
[7] US4637216 (A): Method of liquefying cryogenic gas boil off from heat loss in storage or transfer system: Since it needs to be considered for the proposed idea below that the tank itself is not accessible, this is not a valid concept for the proposed solution.
[8] US2520626 (A): Gas Liquefaction process and apparatus: This apparatus is mainly concerned with the separation of air additives from the base carrier gas and the resulting issues during liquefaction. The described process is earth bound and focusing on the liquefaction of air. The boundary conditions and considered gases are not the same as considered for the present disclosure.
[9] US2520626 (A): Method and Apparatus for transfer of cryogenic liquid: This is a method to allow for insulating the flow of volatile liquid within its vapor. It is not related to the proposed idea, but some general principles disclosed in the document may apply to the present disclosure.
[10] DE2006595 (A1): Vorrichtung zum Verflüssigen von bei sehr niedriger Temperatur kondensierender Gasen: This disclosure concerns a liquifaction unit based on multiple expansion chambers.
[11] US3473342 (A): Method and apparatus for liquefaction of neon: The cooling is done by utilizing an easy accessible cryogenic liquid with lower saturation temperature (nitrogen), which is supplied by separate means. This is not applicable to the proposed system, since such a cooling liquid is not readily available in space.
[12] EP3650741 (A1): Method and device for storage and supply of liquid hydrogen: Method and device for storage and supply of liquid hydrogen: This is an overall system including the storage units. There are no details provided for the liquefaction unit itself. The system is gravitational bound and considered within the earth environmental conditions.
[13] A. Alekseevet al., Wasserstoff-Verflüssigung, Speicherung, Transport und Anwendung von flüssigem Wasserstoff. DOI: 10.5445/IR/1000155199
[14] IDW Nachrichten; Energietechnik: Mobiler Wasserstoff-Verflüssiger entwickelt - Wissenschaftsstadt Dresden - Aktuelles aus der Forschung: Energie 2020
[15] Chart Industries; Product online presentation: Hydrogen liquifiers; https://de.chartindustries.com/Products/Hydrogen-Liquefiers
[16] Engie; ENGIE und ArianeGroup schließen sich im Bereich erneuerbarer Flüssigwasserstoff zusammen

### Summary

It is an object of the present disclosure to provide a technique for storing a cryogenic liquid in an in-space application, which solves one or more of the problems indicated above or a related problem. In particular, a technique is provided which may extend the duration of storage of cryogenic liquids in space.

The proposed storage system uses the changed conditions of the space environment to facilitate the liquefaction of vapor. The basic principles of radiation, Joule-Thomsen effect and utilization of thermal properties of gases are still valid (i.e., are valid on the ground as well as in the space environment). Related to the efficiency of the system, liquefaction of all liquids could be possible.

According to a first aspect, a storage system for a cryogenic liquid in an in-space application is provided. The system comprises a storage tank for storing the cryogenic liquid. The storage tank has an outlet for discharging boil-off gas into a boil-off gas line and an inlet for introducing re-liquefied cryogenic liquid. The system further comprises a cooling section for carrying a cooling medium. The cooling section comprises a space background cooling radiator for radiating heat from the cooling medium into space. The space background cooling radiator is configured to cool down the cooling medium. The cooling section further comprises a cooling element configured to carry the cooling medium after having passed the space background cooling radiator. The cooling element is in thermal contact with the boil-off gas discharged from the storage tank. The cooling element is configured to cool down the boil-off gas. The cooling section is configured to at least partially re-liquefy the cooled down boil-off gas to become the re-liquefied cryogenic liquid introduced via the inlet into the storage tank.

The system may be employed on a rocket, a spacecraft, or on any other structure configured to be utilized in space. The cryogenic liquid may be or may contain liquid hydrogen (LH2), liquid oxygen (LOX), liquid methane (LCH4), and/or liquid nitrogen (LN2). The cryogenic liquid may be, in particular, used or usable as a rocket propellant or a spacecraft propellant. The storage tank may have a substantially cylindrical wall section. A wall of the storage tank may comprise a multi-layer insulation. The re-liquefied cryogenic liquid may be cryogenic liquid which has been re-liquefied from the boil-off gas discharged from the outlet. The cooling section may comprise a cooling line carrying the cooling medium. The cooling line may be a closed circuit. The cooling medium may be taken from the storage tank. However, also another suitable cooling medium may be used for being circulated in the cooling section (such as helium or nitrogen). The space background cooling radiator may comprise a plurality of radiator elements. The space background cooling radiator may comprise a radiation surface configured to be in direct contact with space and at least one flow channel provided in thermal contact with the radiation surface, such that heat is radiated from the cooling surface into space when the cooling medium flows through the channel. Thereby, heat is removed from the cooling medium and the cooling medium is cooled down.

The cooling element may comprise a cooling spiral wrapped around the boil-off gas line through which the boil-off gas is passed. Alternatively, the cooling element may comprise a cooling sleeve enclosing a line through which the boil-off gas is passed. The cooling element may be configured to remove heat from the boil-off gas while the boil-off gas passes through the cooling element. The removed heat is absorbed by the cooling medium flowing through the cooling element. When the boil-off gas exits the cooling element, it may already be in the liquid phase or at least cooled down close to the saturation temperature.

The cooling section is configured to at least partially re-liquefy the cooled down boil-off gas. This may be achieved by the cooling element alone or, additionally, one or more expansion stages may be passed, as explained below. Further, the boil-off gas may not be completely re-liquefied but rather brought into a state of gas/liquid mixture from which the liquid part is separated and introduced into the storage tank. A corresponding fluid-gas separation device is explained below.

A control unit may be provided to control at least one, and in particular all components of the storage system. The control unit may be configured, in particular, to control all valves and compressors mentioned herein. The control unit may comprise a processor and a memory, wherein instructions are stored on the memory which cause the processor to carry out a control of the storage system as described herein. In particular, the instructions may cause the processor to carry out at least one of the methods described herein.

The storage system may further comprise an expansion outlet for letting out part of the cooled down boil-off gas into space and to thereby further cool down a remaining part of the boil-off gas.

The expansion outlet may be controlled by a valve. The valve may be controlled by the control unit. If required for further cooling down of the boil-off gas, the valve may be opened to let part of the cooled down boil-off gas expand into space and if the cooled down boil-off gas is already liquefied, the valve may remain closed. The expansion outlet may be coupled to an expander arranged in the boil-off gas line carrying the cooled down boil-off gas.

The cooling section may comprise a compressor arranged upstream from the space background cooling radiator, the compressor being configured to compress the cooling medium before it enters the space background cooling radiator.

By compressing the cooling medium, a temperature of the cooling medium downstream from the compressor is increased as compared to a temperature upstream from the compressor. This higher temperature gas is then lead into the space background cooling radiator. A valve may be arranged in the cooling section upstream from the compressor. The valve may be controlled by the control unit.

The cooling section may comprise an expander arranged downstream from the space background cooling radiator, the expander being configured to expand and thereby further cool down the cooling medium before it enters the cooling element.

Thus, the expander is arranged in the cooling section between the space background cooling radiator and the cooling element.

The storage system may further comprise a separator arranged in the boil-off gas line for separating a predefined amount of boil-off gas from the boil-off gas discharged from the storage tank, wherein the predefined amount of boil-off gas is used as the cooling medium of the cooling section.

The predefined amount of boil-off gas separated from the boil-off gas line may be controlled by a valve arranged in the cooling section downstream from the separator. The valve may be controlled by the control unit.

The storage system may further comprise a compressor for compressing the cooling medium after having passed the cooling element, and an inlet element arranged in the boil-off gas line upstream from the separator for re-introducing the compressed cooling medium into the boil-off gas line.

The compressor may be configured to slowly compress the cooling medium to prevent energy increase as much as possible.

The storage system may further comprise a further expansion outlet arranged upstream from the cooling element or downstream from the cooling element and configured to let out part of the cooling medium into space and to thereby further cool down a remaining part of the cooling medium.

The further expansion outlet may be controlled by a valve. The valve may be controlled by the control unit. The further expansion outlet may be opened by the valve if required, e.g., in case a temperature of the cooling medium is above a predefined threshold temperature. The remaining part of the cooling medium is the cooling medium flowing through the cooling section, which is not let out via the further expansion outlet.

The storage system may further comprise a cooling medium tank configured to feed the cooling medium into the cooling section, wherein the cooling section comprises a closed cooling circuit.

The cooling medium may be a suitable coolant. For example, the cooling medium may be helium (in particular in the case that the cryogenic liquid is hydrogen) or nitrogen (in particular in the case that the cryogenic liquid is oxygen). In particular, the cooling medium may be a medium different from the cryogenic liquid. The cooling medium may be introduced into the cooling section via a valve. The valve may be controlled by the control unit. In the cooling circuit, the cooling medium is circulated. The cooling circuit may be configured such that it does not comprise any openings (i.e., any deliberate openings) to an outside atmosphere. The cooling medium, after having passed the cooling element, may be fed into a compressor and, subsequently, into the space background cooling radiator.

An inlet of the cooling medium being fed into the cooling circuit from the cooling medium tank may be arranged downstream from the cooling element and upstream from the space background cooling radiator.

The storage system may further comprise a fluid-gas separation device configured to separate the re-liquefied cryogenic liquid from a gas/liquid mixture exiting the cooling section.

The fluid-gas separation device may be coupled to the boil-off gas line, in particular to an exit section of the boil-off gas line. The fluid-gas separation device may be configured to receive the gas/liquid mixture from the boil-off gas line. Optionally, a predefined section of the boil-off gas may be directly fed from the storage tank into the gas/liquid mixture entering the fluid-gas separation device.

The fluid-gas separation device may comprise a multi-channel structure, wherein at least a first channel and a second channel are extending in parallel and the first channel and the second channel are fluidly connected via openings in a first channel wall separating the first channel and the second channel.

Extending in parallel may mean that the first and second channels share at least one common channel wall, i.e., the fist channel wall. The first channel and the second channel thereby may be bent, in particular, they may be bent around a cylindrical outer surface of the storage tank. At least one of the openings and, in particular, all of the openings may have a triangular shape. Additionally or alternatively, at least one of the openings and, in particular, all of the openings may have a droplet shape. Any other shape may be used. Due to the openings, the first and the second channels are not completely (i.e., gas tight our fluid tight) separated from each other by the first channel wall. Instead, fluid and/or gas may pass through the openings from the first to the second channel and vice versa.

The first channel may be an inner channel extending along an outer wall of the storage tank, the inner channel having a second channel wall oriented towards the storage tank. The second channel may be an outer channel extending parallel to the inner channel. The second channel may contact the first channel via the first channel wall. The first channel wall and the second channel wall may be opposite channel walls of the inner channel.

The inner channel may be referred to as inner channel because it is arranged closer to an inside of the storage tank as compared to the outer channel. The outer wall of the storage tank may correspond to the second channel wall of the inner channel. The first channel may be in contact, in particular in thermal contact, with the storage tank whereas the second channel is not in contact with the storage tank. The second channel is in contact with the first channel via the first channel wall.

The inner channel may have a smaller cross-sectional area than the outer channel at each point of the multi-channel structure.

This means that the cross-sectional area of both the inner channel and the outer channel may vary along a course of the multi-channel structure. However, at each point of the multi-channel structure, when considering a cross section of the multi-channel structure at this point, the inner channel may have a smaller cross-sectional area than the outer channel.

The cross-sectional area of the inner channel and/or the cross-sectional area of the outer channel may decrease along the multi-channel structure towards the inlet into the storage tank.

Each of the inner channel and the outer channel may have a rectangular cross-section. Alternatively, the cross section may be trapezoid or may have any other suitable shape. At least one of the sides of said rectangular cross section may decrease in length along the course of the multi-channel structure towards the inlet into the storage tank. In particular, a length of a side of the rectangular cross section parallel to the outer wall of the storage tank may decrease, whereas a length of a side of the rectangular cross section perpendicular to the outer wall of the storage tank stays constant.

According to a second aspect, a method for storing a cryogenic liquid in an in-space application is provided. The method comprises storing the cryogenic liquid in a storage tank, discharging boil-off gas from an outlet of the storage tank into a boil-off gas line, introducing re-liquefied cryogenic liquid into the storage tank via an inlet of the storage tank, carrying a cooling medium through a cooling section, radiating heat from the cooling medium into space by a space background cooling radiator of the cooling section, the space background cooling radiator cooling down the cooling medium, carrying the cooling medium by a cooling element after having passed the space background cooling radiator, the cooling element being in thermal contact with the boil-off gas discharged from the storage tank, the cooling element cooling down the boil-off gas, and at least partially re-liquefying the cooled down boil-off gas by the cooling section to become the re-liquefied cryogenic liquid introduced via the inlet into the storage tank.

All of the features and details of the system discussed with regard to the first aspect may apply to the method of the second aspect. In particular, the system of the first aspect may be configured to carry out the method of the second aspect.

The present disclosure may also be directed to a structure configured to be operated in space (in particular, a rocket or a spacecraft), the structure comprising the storage system of the first aspect. In particular, the storage system may be arranged within a thermal shield of the structure. The expansion outlet(s) may pass through the thermal shield towards space.

### Brief Description of the Drawings

Embodiments of the technique presented herein are described below with reference to the accompanying drawings, in which:
- Fig. 1: shows a schematic representation of a part of a first storage system for a cryogenic liquid according to the present disclosure;
- Fig. 2: shows a schematic representation of a second storage system for a cryogenic liquid according to the present disclosure;
- Fig. 3: shows a schematic representation of a part of a third storage system for a cryogenic liquid according to the present disclosure;
- Fig. 4: shows a schematic side view of a storage tank with a fluid-gas separation device according to the present disclosure;
- Fig. 5: shows a perspective sectional view of the storage tank of Fig. 4; and
- Fig. 6: shows in (a) a schematic side view of a first channel wall with openings of a fluid-gas separation device according to the present disclosure, in (b) a schematic front view of the fluid-gas separation device, and in (c) a schematic side view of a storage tank with the fluid-gas separation device of (a) and (b).

In the following, but without limitation thereto, specific details are expounded in order to give a full understanding of the present disclosure. It is clear to persons skilled in the art, however, that the present invention can be used in other embodiments, which can differ from the details expounded in the following.

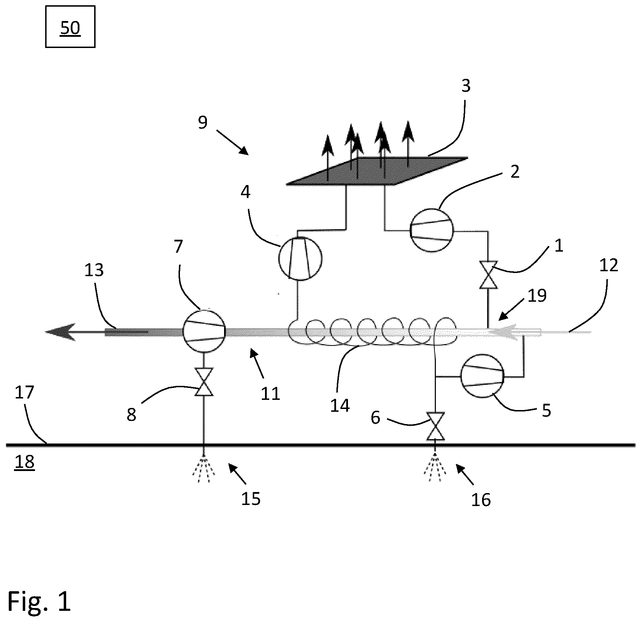

Fig. 1 shows a schematic representation of a part of a first storage system for a cryogenic liquid according to the present disclosure. In Fig. 1, the storage tank in which the cryogenic liquid is stored is not shown. Boil-off gas exits the storage tank and, therefore, is at an entry section 12 of a boil-off gas line 11 of the storage system in a gas phase (also referred to herein as vapor).

The warm vapor flows into the considered arrangement shown in Fig. 1. A reduced amount of vapor is separated from the boil-off gas line 11 by a separator 19 and flows into a compressor system, which may comprise at least one compressor 2. This higher temperature vapor is then lead into a space background cooling radiator 3 which may comprise at least one radiator section. The resulting vapor of reduced temperature is then expanded by an expander 4 to be further cooled. If a further expansion is needed, a part of the gas can be released into space via an optional expansion outlet 6. The final gas is slowly compressed by a compressor 5 to prevent energy increase as much as possible and re-introduced into the original vapor flow of the boil-off gas line 11. If the efficiency of this cooling system is not achieving the resulting cool down for liquefaction, a system of compressors and expanders 7 can be used to further reduce the energy to achieve liquefaction of the considered vapor flow.

At an exit section 13 of the boil-off gas line 11, the boil-off "gas" is (again) in liquid state or at least partially in liquid state.

The storage system of Fig. 1 can also be described as follows. The storage system comprises a storage tank (not shown in Fig. 1) for storing the cryogenic liquid, the storage tank having an outlet for discharging boil-off gas into a boil-off gas line 11 and an inlet for introducing re-liquefied cryogenic liquid. The storage system comprises a cooling section 9 for carrying a cooling medium. In the arrangement of Fig. 1, the cooling medium is a predefined amount of the boil-off gas separated from the boil-off gas line 11. The cooling section 9 comprises a space background cooling radiator 3 for radiating heat from the cooling medium into space. The space background cooling radiator 3 is configured to cool down the cooling medium. The cooling section 9 further comprises a cooling element 14 configured to carry the cooling medium after having passed the space background cooling radiator 3, the cooling element 14 being in thermal contact with the boil-off gas discharged from the storage tank. The cooling element 14 is configured to cool down the boil-off gas. The cooling section 9 is configured to at least partially re-liquefy the cooled down boil-off gas to become the re-liquefied cryogenic liquid introduced via the inlet into the storage tank.

The cooling section 9 may also be referred to as a cooling circuit, wherein in the case of Fig. 1 the cooling section 9 is not a closed circuit since, after having passed the cooling element 14, the cooling medium is re-introduced into the boil-off gas line 11 and not directly back into the cooling section 9. The cooling section comprises a valve 1 to control the introduction and/or amount of boil-off gas introduced into the cooling section 9. The cooling section 9 further comprises a compressor 2, downstream from the valve 1. Downstream from the compressor 2, the space background cooling radiator 3 is arranged in the cooling section 9. Downstream from the space background cooling radiator 3, an expander 4 is arranged for expanding the cooling medium. Downstream from the expander, the cooling element 14 is arranged in the cooling section 9. In the example shown in Fig. 1, the cooling element 14 is a cooling spiral wrapped around the boil-off gas line 11. The cooling element 14 is thereby in thermal contact with the boil-off gas in the boil-off gas line 11. And is configured to absorb heat from the boil-off gas within the boil-off gas line 11 and to thereby cool down the boil-off gas. After having passed the cooling element 14, the cooling medium is compressed by compressor 5 and re-introduced into the cool-off gas line 11 at a position of the cool-off gas line 11 upstream from the separator 19.

At a position of the cooling section 9 between the cooling element 14 and the compressor 5, a valve 6 is arranged for controlling an expansion of the cooling medium into space via an expansion outlet 16. Further, in the boil-off gas line 11, downstream from the cooling element 14, an expander 7 may be arranged and, connected to the expander 7, a valve 8 is provided for controlling an expansion of the boil-off gas into space via an expansion outlet 15.

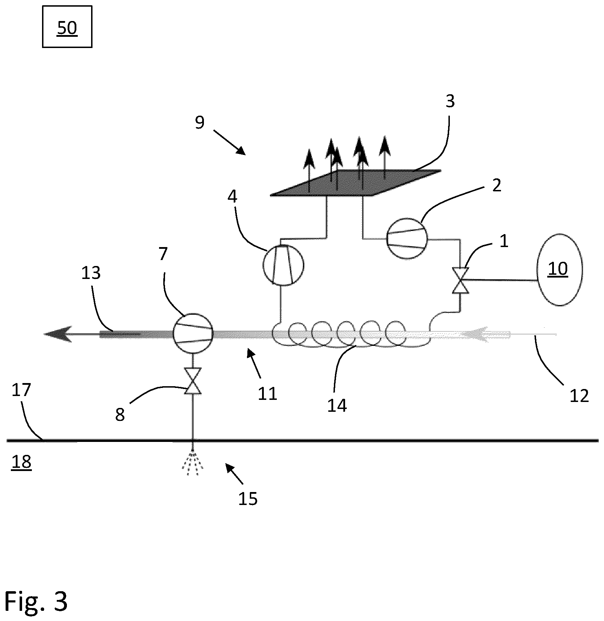

The arrangement shown in Fig. 1 is provided behind a thermal shield 17 shielding the arrangement from space 18. Although not explicitly shown in Fig. 1 and Fig. 3, the space background cooling radiator 3 is provided on an outside of the thermal shield 17, i.e., in space 18. The other elements of the storage system shown in Fig. 1 and Fig. 3 above the thermal shield 17 are provided on an inside of the thermal shield 17 and, therefore, are thermally shielded from space 18.

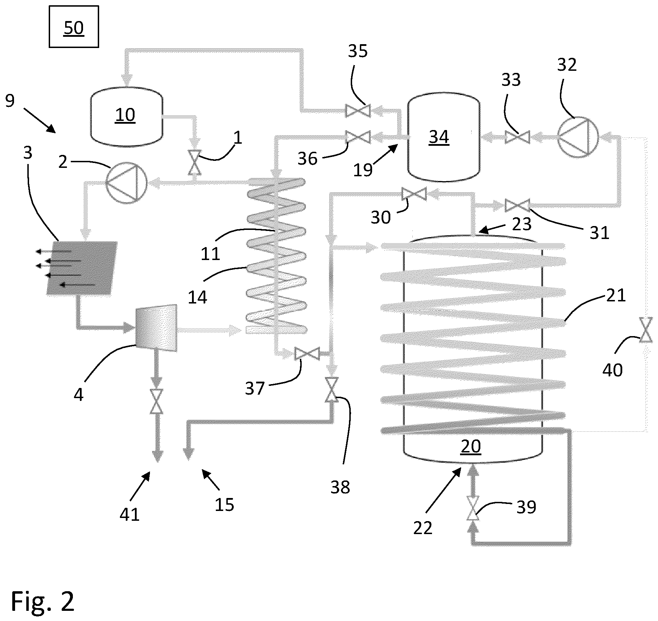

Fig. 2 shows a schematic representation of a second storage system for a cryogenic liquid according to the present disclosure. The second storage system may be regarded as a modified version of the first storage system of Fig. 1 and the representation of Fig. 2 is more detailed than that of Fig. 1.

Like reference numerals in Fig. 2 refer to like elements of the described system of Fig. 1. Further, if not stated otherwise below, the description and functionality of the elements of Fig. 2 is the same as discussed above with regard to Fig. 1.

In the storage system shown in Fig. 2, the cooling section 9 is a closed cooling circuit wherein the cooling medium circulates through the cooling section 9. Thus, after having passed the expander 4 and the cooling element 14, the cooling medium is circulated directly back into the cooling section 9, i.e., into the compressor 2 of the cooling section. Similar to the embodiment of Fig. 1, in the embodiment of Fig. 2, the cooling medium is the boil-off gas taken from the storage container 20.

Further, Fig. 2 shows the storage tank 20 in which the cryogenic liquid is stored. Boil-off gas exits the storage tank 20 via an outlet 23. A section of the boil-off gas is separated from the boil-off gas leaving the outlet 23 and is introduced, via a valve 30 into a gas/liquid mixture leaving the cooling section 9 described later. A remaining part of the boil-off gas passes a valve 31 and is compressed by a compressor 32. The compressed gas passes a valve 33 and is lead into a high pressure storage tank 34. Downstream from the high pressure storage tank 34, a predefined amount of boil-off gas is separated via a separator 19 and passes a valve 35. After having passed the valve 35, the gas is stored in a cooling medium tank 10. The introduction of the cooling medium into the cooling section 9 is controlled via valve 1. The cooling medium is introduced into the cooling section 9 between the cooling element 14 and the compressor 2.

The gas not being separated by separator 19 passes a valve 36 and subsequently flows through the cooling element 14 to be cooled down and at least partially liquefied. In the embodiment shown in Fig. 2, the cooling element 14 is a cooling spiral wrapped around the boil-off gas line 11. After having passed the cooling element 14, the at least partially re-liquefied boil-off gas passes a valve 37. Downstream from the valve 37, a predefined amount of the boil-off gas may be expanded to space via expansion outlet 15. The predefined amount can be adjusted via a valve 38. The remaining part of the at least partially re-liquefied boil-off gas (i.e., the amount not being expanded into space) is optionally mixed with the boil-off gas taken directly from the storage tank 20 via valve 30 and subsequently enters the fluid-gas separation device 21, which is explained later in further detail. After separation via the fluid-gas separation device 21, a separated liquid part is re-introduced into the storage tank 20 via an inlet 22 of the storage tank 20. The process of re-introducing the liquid part may be controlled via a valve 39. After separation via the fluid-gas separation device 21, a separated gas part passes a valve 40 and is introduced into the stream of boil-off gas at a position upstream from the compressor 32.

Further, from the expander 4, a predefined amount of cooling medium may be expanded into space via expansion outlet 41.

Fig. 3 shows a schematic representation of a part of a third storage system for a cryogenic liquid according to the present disclosure. The embodiment of Fig. 3 is similar to that of Fig. 1, wherein in the following, only the differences are explained.

In the storage system of Fig. 3, the cooling section 9 is a closed cooling circuit, similar to the embodiment of Fig. 2. However, as a cooling medium, the cooling section 9 does not use the boil-off gas taken from the storage tank 20 but rather circulates a different cooling medium. The cooling medium is a suitable coolant stored in a cooling medium tank 10. For example, the cooling medium may be helium (in particular in the case that the cryogenic liquid is hydrogen) or nitrogen (in particular in the case that the cryogenic liquid is oxygen).

The elements 5, 6, 16, and 19 of the embodiment of Fig. 1 are not provided in the embodiment of Fig. 3.

The embodiment of Fig. 3 may also be explained as follows: The cooling medium is led from the cooling medium tank 10 via a control valve 1 into a compressor system, which may comprise one or more compressors 2. This leads to a state of higher pressure and temperature. This higher temperature cooling medium is then lead into a space background cooling radiator 3 which may comprise multiple radiators or radiator elements. The resulting cooling medium of reduced temperature is then expanded by an expander 4 to be further cooled. To prevent loss of cooling medium, no release into space is considered in the embodiment of Fig. 3.

The main process principle is similar to the processes within standard cooling devices (e.g., fridge). An advanced aspect of the proposed idea are the operating environmental conditions, such as micro gravity and the space environment. This poses the challenge of missing natural convection and missing localization of liquids. The low gravity also allows for more pronounced use of capillary effects to achieve passive fluid separation and transport means. Also, the aim of liquefying cryogenic fluids reduces the options concerning media to gaseous media such as Helium.

For all systems described in the above Figures 1-3, an additional compressor-expander system 7 may be used to achieve the final liquefied state, this can also include utilization of the space as expander volume (see valve 8), reducing the efficiency due to loss of fluid, but may enable even lower temperatures.

All of the above-described systems can be designed to be independent of the medium used. It shall have a control system, which regulates the system to each considered medium.

More precisely, all of the systems described with reference to Figs. 1-3 comprise a control unit 50 controlling, in particular, each of the valves of the respective system and each of the compressors. The control unit 50 comprises a processor and a memory storing instructions to cause the control unit 50 to control the respective system (in particular, the valves and the compressors) to operate according to a predefined method.

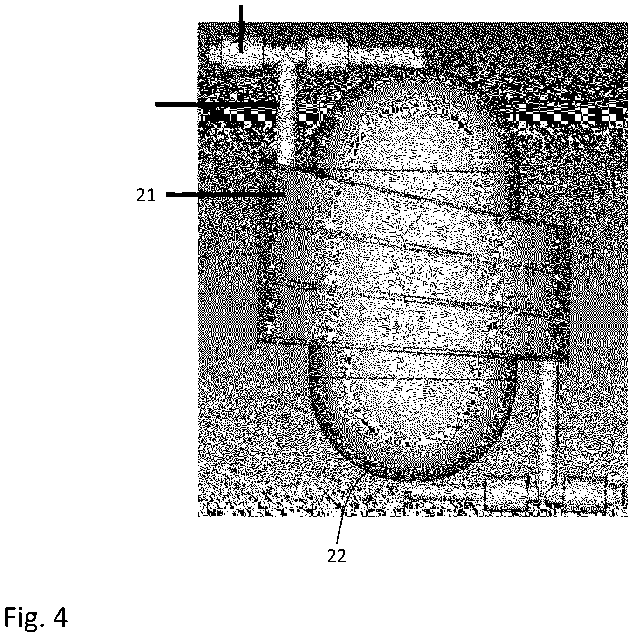

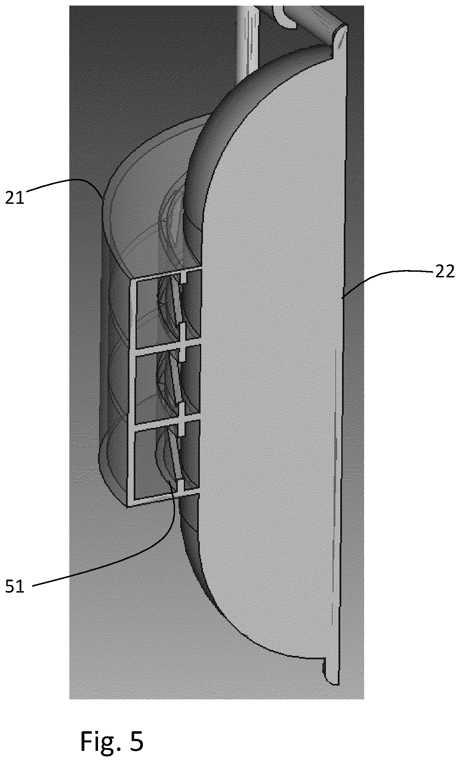

Fig. 4 shows a schematic side view of the storage tank 20 with a fluid-gas separation device 21 according to the present disclosure. Fig. 5 shows a perspective sectional view of the storage tank 20 of Fig. 4.

The fluid-gas separation device 21 described in the following with reference to Figs. 4-6 can be used in any of the above-described storage systems of Figs. 1-3.

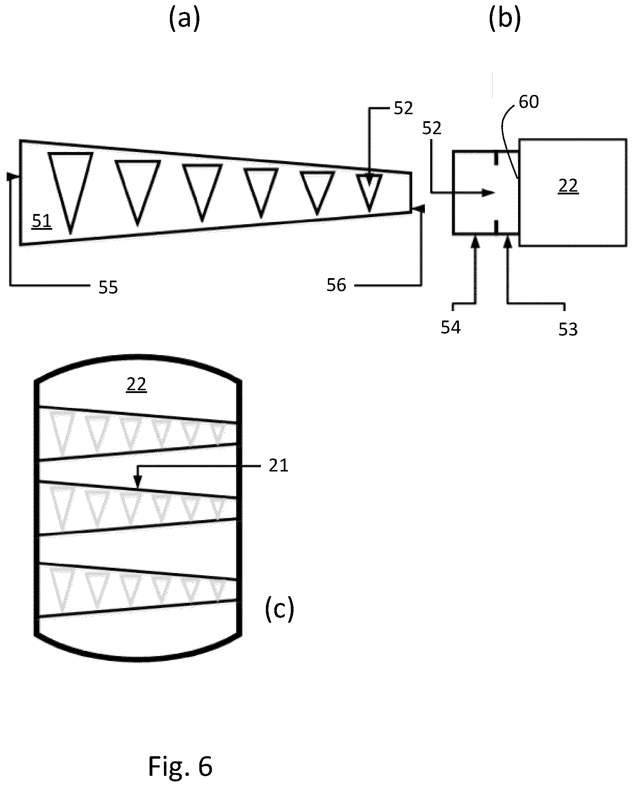

In the sectional view of Fig. 5, it is visible that the fluid-gas separation device 21 comprises a multi-channel structure. More precisely, the fluid gas separation device 21 comprises a double channel structure wherein an inner channel and an outer channel are separated by a first channel wall 51. The first channel wall 51 comprises openings, such that gas and/or liquid can pass through said first channel wall 51. Details of the fluid-gas separation device 21 are explained with reference to Fig. 6. The fluid-gas separation device 21 may also be referred to herein as condenser.

Fig. 6 shows in (a) a schematic side view of the first channel wall 51 with openings 52 of a fluid-gas separation device according to the present disclosure, in (b) a schematic front view of the fluid-gas separation device 21, and in (c) a schematic side view of a storage tank 20 with the fluid-gas separation device 21 of (a) and (b).

To separate the liquid from the gas the fluid-gas separation device 21 (condenser) is double walled with openings 52 (in particular, cutouts) in the separation wall, i.e., the first channel wall 51. The inner channel 53 is smaller to increase the capillary force at the tank side and keep condensing liquid at the colder wall. Gas can be dispelled via the openings 52 in the separation plane. The double channel is designed such that its height decreases with decreasing distance to the entrance point, i.e., the inlet 22 into the storage tank 20. As shown in Fig. 6(a), the height of the first channel wall 51 decreases as the gas/liquid mixture moves from an inlet side 55 of the fluid-gas separation device 21 to an outlet side 56 of the fluid-gas separation device 21. This allows for a driving pressure within small liquid volumes formed by condensation which drives the liquid further to the bottom of the tank. The liquid flows then into a line with again a separation point at the lower end before flowing back into the tank. The line is either also conical to allow for the same capillary transport mechanism or an established pressure difference is applied using the aforementioned buffer tank related to expected amount of liquid.

The fluid-gas separation device 21 is coupled to the boil-off gas line 11, in particular to the exit section 13 of the boil-off gas line 11. The fluid-gas separation device 21 is configured to receive the gas/liquid mixture from the boil-off gas line 11. Optionally, a predefined section of the boil-off gas may be directly fed from the storage tank 20 into the gas/liquid mixture entering the fluid-gas separation device 21 as shown in Fig. 2.

The fluid-gas separation device 21 comprises a multi-channel structure, which is, in the case of Figs. 4-6, a double channel structure. A first channel 53 and a second channel 54 are extending in parallel and the first channel 53 and the second channel 54 are fluidly connected via openings 52 in a first channel wall 51 separating the first channel 53 and the second channel 54.

Extending in parallel may mean that the first and second channels 53, 54 share at least one common channel wall, i.e., the fist channel wall 51. The first channel 53 and the second channel 54 thereby may be bent, in particular, they may be bent around a cylindrical outer surface of the storage tank 20 as shown in Figs. 4 and 5. The openings 52 have a triangular shape. Due to the openings 52, the first and the second channels 53, 54 are not completely (i.e., gas tight our fluid tight) separated from each other by the first channel wall 51. Instead, fluid and/or gas may pass through the openings 52 from the first to the second channel and vice versa.

The first channel 53 is an inner channel extending along an outer wall of the storage tank 20, the inner channel 53 having a second channel wall 60 oriented towards the storage tank 20. The second channel 54 is an outer channel extending parallel to the inner channel 53. The second channel 54 contacts the first channel 53 via the first channel wall 51. The first channel wall 51 and the second channel wall 60 are opposite channel walls of the inner channel (53).

The inner channel 53 may be referred to as inner channel because it is arranged closer to an inside of the storage tank 20 as compared to the outer channel 54. The outer wall of the storage tank 20 may correspond to the second channel wall 60 of the inner channel 53. The first channel 53 is in contact, in particular in thermal contact, with the storage tank 20 whereas the second channel 54 is not in contact with the storage tank 20. The second channel 54 is in contact with the first channel 53 via the first channel wall 51.

The inner channel 53 has a smaller cross-sectional area than the outer channel 54 at each point of the multi-channel structure, see Fig. 6(b).

This means that the cross-sectional area of both the inner channel 53 and the outer channel 54 may vary along a course of the multi-channel structure. However, at each point of the multi-channel structure, when considering a cross section of the multi-channel structure at this point, the inner channel 53 has a smaller cross-sectional area than the outer channel 54.

The cross-sectional area of the inner channel 53 and/or the cross-sectional area of the outer channel 54 decrease along the multi-channel structure towards the inlet 22 into the storage tank 20.

Each of the inner channel 53 and the outer channel 54 have a rectangular cross-section. At least one of the sides of said rectangular cross section may decrease in length along the course of the multi-channel structure towards the inlet 22 into the storage tank 20. In particular, a length of a side of the rectangular cross section parallel to the outer wall of the storage tank 20 may decrease, whereas a length of a side of the rectangular cross section perpendicular to the outer wall of the storage tank 20 stays constant.

This multi-channel structure and, in particular, the double channel structure discussed with regard to Figs. 4-6 has at least the following technical advantages. Condensing liquid and separation of liquid and gas. Pre-cooling of vapour. Support of thermal insulation of the storage tank.

The technique of the above disclosure may further be embodied and/or summarized as follows. At least one of the aspects mentioned below may be combined with the aforementioned aspects of the present disclosure.
1. Using a liquefier for in space application comprising of
   a. an in-space adapted cryo-cooler
      i. Using space background cooling or
      ii. Using the vacuum of space as an expansion body
   b. and a liquid-gas separator apparatus for microgravity environments comprising of
      i. A double-walled condenser with an inner wall having smaller channels than an outer wall, said inner wall configured to draw condensed liquid towards a cold surface using capillary force;
      ii. Openings in a separation plane between said inner and outer walls, allowing gas passage while retaining liquid on the colder side of the inner wall;
      iii. Said double-walled condenser comprising a height-decreasing channel configuration with decreasing height along its length from an entrance point to facilitate capillary-driven liquid transport towards an outlet;
      iv. A liquid line connected to said outlet, configured to transport condensed liquid back into a tank, wherein said liquid line is either:
         1. Conical in shape with decreasing cross-section along its length, facilitating capillary-driven liquid transport; or
         2. Pressurized using an established pressure difference created by a buffer tank, driving liquid flow through the line;
      v. A separation point at a lower end of said liquid line before it rejoins the tank, allowing gas to disengage from the liquid;
   c. a buffer system to enable gas storage and maintain the required pressure difference for driving the liquid flow in microgravity conditions

The technique of the above disclosure may have at least one of the following technical advantages:
1. Enabling system:
   a. Enabling long-term cryogenic space missions
   b. Enabling propellant production in space from water (celestial body take off)
2. Increase in performance, reduction of non-propulsive fluid mass:
   a. Reduction boil-off losses → reduction of need for thermal insulation
   b. Reduction of losses of cryogenic media during transfer
   c. Reduction of He need for pressurization (full autogenous pressurization)
   d. Less propellant to be transported to space → smaller tanks, less structure, less pressure

Challenges in designing a solution for in-space application lie in the separation of the gaseous from the liquid phase in non-defined acceleration conditions. This concerns not only the extraction of the vapor phase but also the positioning of the liquid phase in all parts of the liquefaction circuit.

The cooling circuit will need to rely on capillary effects in order to reroute the condensed liquid media back to the tank and keep the non-condensed gaseous phase in the cooling circuit. This is contrary to earth bound applications in which gravity can be used for this separation.

Additionally, in space bound applications the thermal management concerning sun and background radiation needs to be taken into account. This affects the design of the thermal sink which cannot rely on natural convection and needs to balance the exact heat flow needed at different times of use (storage, transfer, reconditioning).

Additionally, for reconditioning an increased pressure storage tank would be needed as a buffer volume to ensure correct transfer if the liquefier is not used in a closed system (closed-loop: storage; open loop: transfer).

In the above description and in the figures, the same reference numerals are used for corresponding features or units of different embodiments. However, the details expounded with regard to one of these features or units also hold accordingly for the features of other embodiments having the same reference sign. Further, the present invention is not limited to the embodiments described above, which are merely examples how the present invention could be carried out. The technique of the above disclosure may also be embodied in the form of a method and/or a corresponding computer program product.

## Claims

1. A storage system for a cryogenic liquid in an in-space application, the system comprising:
a storage tank (20) for storing the cryogenic liquid, the storage tank (20) having an outlet (23) for discharging boil-off gas into a boil-off gas line (11) and an inlet (22) for introducing re-liquefied cryogenic liquid; and
a cooling section (9) for carrying a cooling medium, the cooling section comprising:
a space background cooling radiator (3) for radiating heat from the cooling medium into space, the space background cooling radiator (3) being configured to cool down the cooling medium; and
a cooling element (14) configured to carry the cooling medium after having passed the space background cooling radiator (3), the cooling element (14) being in thermal contact with the boil-off gas discharged from the storage tank (20), the cooling element (14) being configured to cool down the boil-off gas,
wherein the cooling section (9) is configured to at least partially re-liquefy the cooled down boil-off gas to become the re-liquefied cryogenic liquid introduced via the inlet (22) into the storage tank (20).

2. The storage system of claim 1, further comprising an expansion outlet (15) for letting out part of the cooled down boil-off gas into space and to thereby further cool down a remaining part of the boil-off gas.

3. The storage system of claim 1 or 2, wherein the cooling section (9) comprises a compressor (2) arranged upstream from the space background cooling radiator (3), the compressor (2) being configured to compress the cooling medium before it enters the space background cooling radiator (3).

4. The storage system of any of claims 1 to 3, wherein the cooling section (9) comprises an expander (4) arranged downstream from the space background cooling radiator (3), the expander (4) being configured to expand and thereby further cool down the cooling medium before it enters the cooling element (14).

5. The storage system of any of claims 1 to 4, further comprising a separator (19) arranged in the boil-off gas line (11) for separating a predefined amount of boil-off gas from the boil-off gas discharged from the storage tank (20), wherein the predefined amount of boil-off gas is used as the cooling medium of the cooling section (9).

6. The storage system of claim 5, further comprising:
a compressor (5) for compressing the cooling medium after having passed the cooling element; and
an inlet element arranged in the boil-off gas line (11) upstream from the separator (19) for re-introducing the compressed cooling medium into the boil-off gas line (11).

7. The storage system of claim 5 or 6, further comprising a further expansion outlet (16, 41) arranged upstream from the cooling element (14) or downstream from the cooling element (14) and configured to let out part of the cooling medium into space and to thereby further cool down a remaining part of the cooling medium.

8. The storage system of any of claims 1 to 4, further comprising a cooling medium tank (10) configured to feed the cooling medium into the cooling section (9), wherein the cooling section (9) comprises a closed cooling circuit.

9. The storage system of claim 8, wherein an inlet of the cooling medium being fed into the cooling circuit from the cooling medium tank (10) is arranged downstream from the cooling element (14) and upstream from the space background cooling radiator (3).

10. The storage system of any of claims 1 to 9, further comprising a fluid-gas separation device (21) configured to separate the re-liquefied cryogenic liquid from a gas/liquid mixture exiting the cooling section (9).

11. The storage system of claim 10, wherein the fluid-gas separation device (21) comprises a multi-channel structure, wherein at least a first channel (53) and a second channel (54) are extending in parallel and the first channel (53) and the second channel (54) are fluidly connected via openings (52) in a first channel wall (51) separating the first channel (53) and the second channel (54).

12. The storage system of claim 11, wherein the first channel (53) is an inner channel extending along an outer wall of the storage tank, the inner channel having a second channel wall oriented towards the storage tank, and the second channel (54) is an outer channel extending parallel to the inner channel, the second channel contacting the first channel via the first channel wall (51), the first channel wall and the second channel wall being opposite channel walls of the inner channel.

13. The storage system of claim 12, wherein the inner channel (53) has a smaller cross-sectional area than the outer channel (54) at each point of the multi-channel structure.

14. The storage system of claim 13, wherein the cross-sectional area of the inner channel (53) and/or the cross-sectional area of the outer channel (54) decreases along the multi-channel structure towards the inlet (22) into the storage tank (20).

15. A method for storing a cryogenic liquid in an in-space application, the method comprising:
storing the cryogenic liquid in a storage tank (20);
discharging boil-off gas from an outlet (23) of the storage tank into a boil-off gas line (11);
introducing re-liquefied cryogenic liquid into the storage tank (20) via an inlet (22) of the storage tank (20);
carrying a cooling medium through a cooling section (9);
radiating heat from the cooling medium into space by a space background cooling radiator (3) of the cooling section (9), the space background cooling radiator (3) cooling down the cooling medium;
carrying the cooling medium by a cooling element (14) after having passed the space background cooling radiator (3), the cooling element (14) being in thermal contact with the boil-off gas discharged from the storage tank (20), the cooling element (14) cooling down the boil-off gas; and
at least partially re-liquefying the cooled down boil-off gas by the cooling section (9) to become the re-liquefied cryogenic liquid introduced via the inlet (22) into the storage tank (20).

## Amended claims

### Amended claims in accordance with Rule 137(2) EPC.

1. A storage system for a cryogenic liquid in an in-space application, the system comprising:
a storage tank (20) for storing the cryogenic liquid, the storage tank (20) having an outlet (23) for discharging boil-off gas into a boil-off gas line (11) and an inlet (22) for introducing re-liquefied cryogenic liquid; and
a cooling section (9) for carrying a cooling medium, the cooling section comprising:
a space background cooling radiator (3) for radiating heat from the cooling medium into space, the space background cooling radiator (3) being configured to cool down the cooling medium; and
a cooling element (14) configured to carry the cooling medium after having passed the space background cooling radiator (3), the cooling element (14) being in thermal contact with the boil-off gas discharged from the storage tank (20), the cooling element (14) being configured to cool down the boil-off gas,
wherein the cooling section (9) is configured to at least partially re-liquefy the cooled down boil-off gas to become the re-liquefied cryogenic liquid introduced via the inlet (22) into the storage tank (20),
**characterized in that**
the storage system further comprises an expansion outlet (15) for letting out part of the cooled down boil-off gas into space and to thereby further cool down a remaining part of the boil-off gas.

2. The storage system of claim 1, wherein the cooling section (9) comprises a compressor (2) arranged upstream from the space background cooling radiator (3), the compressor (2) being configured to compress the cooling medium before it enters the space background cooling radiator (3).

3. The storage system of claim 1 or 2, wherein the cooling section (9) comprises an expander (4) arranged downstream from the space background cooling radiator (3), the expander (4) being configured to expand and thereby further cool down the cooling medium before it enters the cooling element (14).

4. The storage system of any of claims 1 to 3, further comprising a separator (19) arranged in the boil-off gas line (11) for separating a predefined amount of boil-off gas from the boil-off gas discharged from the storage tank (20), wherein the predefined amount of boil-off gas is used as the cooling medium of the cooling section (9).

5. The storage system of claim 4, further comprising:
a compressor (5) for compressing the cooling medium after having passed the cooling element; and
an inlet element arranged in the boil-off gas line (11) upstream from the separator (19) for re-introducing the compressed cooling medium into the boil-off gas line (11).

6. The storage system of claim 4 or 5, further comprising a further expansion outlet (16, 41) arranged upstream from the cooling element (14) or downstream from the cooling element (14) and configured to let out part of the cooling medium into space and to thereby further cool down a remaining part of the cooling medium.

7. The storage system of any of claims 1 to 3, further comprising a cooling medium tank (10) configured to feed the cooling medium into the cooling section (9), wherein the cooling section (9) comprises a closed cooling circuit.

8. The storage system of claim 7, wherein an inlet of the cooling medium being fed into the cooling circuit from the cooling medium tank (10) is arranged downstream from the cooling element (14) and upstream from the space background cooling radiator (3).

9. The storage system of any of claims 1 to 8, further comprising a fluid-gas separation device (21) configured to separate the re-liquefied cryogenic liquid from a gas/liquid mixture exiting the cooling section (9).

10. The storage system of claim 9, wherein the fluid-gas separation device (21) comprises a multi-channel structure, wherein at least a first channel (53) and a second channel (54) are extending in parallel and the first channel (53) and the second channel (54) are fluidly connected via openings (52) in a first channel wall (51) separating the first channel (53) and the second channel (54).

11. The storage system of claim 10, wherein the first channel (53) is an inner channel extending along an outer wall of the storage tank, the inner channel having a second channel wall oriented towards the storage tank, and the second channel (54) is an outer channel extending parallel to the inner channel, the second channel contacting the first channel via the first channel wall (51), the first channel wall and the second channel wall being opposite channel walls of the inner channel.

12. The storage system of claim 11, wherein the inner channel (53) has a smaller cross-sectional area than the outer channel (54) at each point of the multi-channel structure.

13. The storage system of claim 12, wherein the cross-sectional area of the inner channel (53) and/or the cross-sectional area of the outer channel (54) decreases along the multi-channel structure towards the inlet (22) into the storage tank (20).

14. A method for storing a cryogenic liquid in an in-space application, the method comprising:
storing the cryogenic liquid in a storage tank (20);
discharging boil-off gas from an outlet (23) of the storage tank into a boil-off gas line (11);
introducing re-liquefied cryogenic liquid into the storage tank (20) via an inlet (22) of the storage tank (20);
carrying a cooling medium through a cooling section (9);
radiating heat from the cooling medium into space by a space background cooling radiator (3) of the cooling section (9), the space background cooling radiator (3) cooling down the cooling medium;
carrying the cooling medium by a cooling element (14) after having passed the space background cooling radiator (3), the cooling element (14) being in thermal contact with the boil-off gas discharged from the storage tank (20), the cooling element (14) cooling down the boil-off gas; and
at least partially re-liquefying the cooled down boil-off gas by the cooling section (9) to become the re-liquefied cryogenic liquid introduced via the inlet (22) into the storage tank (20),
**characterized by**
letting out, via an expansion outlet (15), part of the cooled down boil-off gas into space and thereby further cooling down a remaining part of the boil-off gas.
